# DEMANDE DE BREVET EUROPEEN

(11) **EP 2 750 313 A1**
(43) Date de publication de la demande: **02.07.2014**
(21) Numéro de dépôt: 12306695.3
(22) Date de dépôt: 28.12.2012
(51) Int. Cl.: H04J 14/02, H04Q 11/00

(54) **Noeud de réseau de télécommunication mettant en relation un réseau métropolitain avec au moins un réseau d'accès**

(71) Demandeur: Alcatel Lucent, 75007 Paris (FR)
(72) Inventeur: Brenot, Romain, 91767 Palaiseau (FR); De Valicourt, Guilhem, 91460 Nozay (FR)
(74) Mandataire: Sciaux, Edmond

(57) **Abrégé**

Le noeud de réseau de télécommunication mettant en relation un réseau métropolitain, comprenant au moins une liaison optique reliant les noeuds, avec au moins un réseau d'accès, comprend une carte électronique permettant l'agrégation du trafic venant de plusieurs réseau d'accès, un émetteur apte à recevoir un signal électrique de la carte électronique et d'émettre un paquet optique vers le réseau métropolitain, un circulateur apte à extraire un flux de paquets optiques multiplexés de la liaison optique et à insérer un flux de paquets optiques multiplexés dans la liaison optique, et une matrice de commutation en réflexion recevant un flux de paquets optiques multiplexés parmi lesquels elle sélectionne et détecte ceux destinés au réseau d'accès. La matrice de commutation en réflexion comprend un multiplexeur d'insertion/extraction de paquet optique POADM qui reçoit des paquets optiques multiplexés et transmet des paquets optiques démultiplexés, et au moins un amplificateur optique à semiconducteur à réflexion RSOA apte à recevoir un paquet optique démultiplexé, qui comporte trois sections,

## Description

La présente invention se rapporte au domaine des réseaux métropolitains de télécommunication, et en particulier les réseaux de télécommunications par fibre optique à multiplexage spectral de canaux de longueurs d'ondes, appelé en anglais Wavelength Division Multiplexing (WDM).

Les réseaux métropolitains sont soumis à des exigences particulières telles que la flexibilité, la capacité d'auto-configuration et la nécessité de pouvoir introduire des nouveaux services sur demande. L'évolution des nouveaux services Internet est susceptible de créer un trafic sporadique et distribué dans un réseau de télécommunication métropolitain dit MAN (pour « Metropolitan Area Network » en anglais). La bande passante à la demande nécessite une plus grande flexibilité car les réseaux de diffusion de contenu se rapprochent du segment métropolitain. L'avantage de la technologie de paquet optique est de permettre une efficacité élevée grâce à la granularité sous-longueur d'onde.

Un réseau de télécommunication en anneau multiplexé en longueur d'onde WDM comprenant des noeuds de télécommunication basés sur un multiplexeur d'insertion/extraction de paquet optique POADM (pour « Packet Optical Add/drop Multiplexer » en anglais) est capable d'insérer, d'extraire et de transférer des paquets optiques transportés sur des canaux de longueurs d'ondes, en particulier, des paquets optiques transportés sur plusieurs canaux. C'est un candidat prometteur pour l'évolution future des réseaux à commutation de paquet optique. Le traitement électronique est utilisé pour agréger le trafic venant des cartes de ligne du réseau d'accès. La transparence optique réduit le traitement électronique, puisque les paquets optiques peuvent directement transiter vers un autre noeud de télécommunication POADM permettant une économie d'énergie, comparés aux réseaux de télécommunication en anneau avec des noeuds opaques.

Différentes approches ont été proposées, en se concentrant sur un récepteur fixe avec un sélecteur rapide de paquet optique FOPS (pour « Fast Optical Packet Selector » en anglais) en ligne. Dans une solution, le trafic supplémentaire peut être inséré à n'importe quelle longueur d'onde. Dans une autre solution, un laser fixe est utilisé avec un sélecteur rapide de paquet optique FOPS placé avant le récepteur du noeud POADM. Cependant, un compromis entre le coût, dû notamment au nombre de sélecteurs rapides de paquet optique FOPS, et l'efficacité du réseau de télécommunication optique s'avère nécessaire.

Ainsi que mentionné précédemment, le coût d'un sélecteur rapide de paquet optique FOPS est crucial dans la proposition de déploiement réaliste d'un tel réseau de télécommunication optique comprenant des noeuds basés sur un multiplexeur POADM. Une solution a été proposée dans laquelle un amplificateur optique à semiconducteur SOA (pour « Semiconductor Optical Amplifier » en anglais) est utilisé comme porte logique afin d'effacer ou d'amplifier les paquets optiques. Cependant l'utilisation de cette solution dans un système réel se heurte au coût élevé des dispositifs, notamment des amplificateurs optiques SOA.

Diverses autres solutions ont aussi été proposées comme des sélecteurs rapides de paquet optique FOPS intégrés sur une plate-forme InP ou Silicium par différentes technologies (SOA, VOA, MZM pour «March-Zender Modulator » en anglais), comme par exemple un sélecteur rapide de paquet optique FOPS photonique intégré sur du silicium basé sur un atténuateur optique variable VOA (pour « Variable Optical Attenuator » en anglais). Cependant ces solutions ne sont envisagées que dans l'évolution à long terme de ces produits et restent néanmoins toujours très coûteuses.

Récemment on a proposé un sélecteur rapide de paquet optique à réflexion PROS (pour « Packet Reflective Optical Switch» en anglais). Cette structure utilise un amplificateur optique à semiconducteur à réflexion RSOA (pour « Reflective Semiconductor Optical Amplifier » en anglais). Ces amplificateurs optiques RSOA, conçus pour les réseaux d'accès, sont des dispositifs à faible coût permettant de réduire considérablement le coût du noeud POADM et sont disponibles dans le commerce. Un sélecteur rapide de paquet optique réfléchissant PROS doit être placé sur la liaison optique ou devant le récepteur du noeud POADM, afin d'augmenter l'efficacité et la flexibilité du réseau. Toutefois, le compromis à réaliser entre le coût des dispositifs et la performance du réseau conduit à une architecture moins efficace.

Jusqu'ici les efforts se sont portés principalement sur la réduction de coût d'un sélecteur rapide de paquet optique FOPS. Toutefois le coût, lié au nombre de sélecteurs rapides de paquet optique FOPS nécessaire, reste un problème. Cette invention propose une solution dans laquelle l'architecture du réseau de télécommunication optique comprend un nombre moindre de dispositifs nécessaires à la sélection rapides de paquet optique.

L'objet de la présente invention est un noeud de réseau de télécommunication mettant en relation un réseau métropolitain, comprenant au moins une liaison optique reliant les noeuds, avec au moins un réseau d'accès, comprenant
- une carte électronique permettant l'agrégation du trafic venant de plusieurs réseau d'accès,
- un émetteur apte à recevoir un signal électrique de la carte électronique et d'émettre un paquet optique vers le réseau métropolitain,
- un circulateur apte à extraire un flux de paquets optiques multiplexés de la liaison optique et à insérer un flux de paquets optiques multiplexés dans la liaison optique, et
- une matrice de commutation en réflexion recevant un flux de paquets optiques multiplexés parmi lesquels elle sélectionne et détecte ceux destinés au réseau d'accès.

Selon un mode de réalisation, la matrice de commutation en réflexion comprend
- un multiplexeur d'insertion/extraction de paquet optique POADM qui reçoit des paquets optiques multiplexés et transmet des paquets optiques démultiplexés, et
- au moins un amplificateur optique à semiconducteur à réflexion RSOA apte à recevoir un paquet optique démultiplexé, qui comporte trois sections.

Selon un autre mode de réalisation, l'amplificateur optique à semiconducteur à réflexion RSOA comprend
- une première section qui est un amplificateur optique pour amplifier le paquet optique démultiplexé,
- une deuxième section qui est un détecteur qui reçoit le paquet optique démultiplexé amplifié, et détecte les paquets optiques démultiplexés amplifiés destinés à être directement transmis à la carte électronique selon les instructions reçues, et
- une troisième section qui est une porte logique pour l'extraction ou la transmission par réflexion des paquets optiques démultiplexés amplifiés.

La solution technique proposée est une matrice de commutation en réflexion appelé sélecteur / détecteur rapide de paquet optique PROS/D qui est unique et permet la sélection de paquet optique pour le flux de données de transit et la détection simultanée. Il est constitué d'un amplificateur optique RSOA à plusieurs sections afin de remplir des fonctions séparées simultanément. La matrice de commutation PROS/D à amplificateur multi-section RSOA porté par une seule puce réduit le nombre de FOPS nécessaire tout en préservant une performance de réseau élevée. Cette matrice de commutation PROS/D permet la détection, la sélection et les fonctions de diffusion / sélection lorsqu'un même paquet est envoyé à plusieurs noeuds différents pour de la multidiffusion (ou « multicasting » en anglais) par exemple.

Selon une forme d'exécution, le détecteur identifie le paquet optique démultiplexé amplifié, se réfère aux instructions reçues, et réalise l'envoi du paquet optique démultiplexé amplifié sous la forme d'un signal électrique vers la carte électronique du réseau d'accès.

Selon une autre forme d'exécution, le détecteur identifie le paquet optique démultiplexé amplifié, se réfère aux instructions reçues, et réalise l'envoi du paquet optique démultiplexé amplifié vers la troisième section.

Dans ce dernier cas, selon une variante, la porte logique de la troisième section identifie le paquet optique démultiplexé amplifié, se réfère aux instructions reçues, et extrait le paquet optique. Selon une autre variante, la porte logique dans la troisième section identifie le paquet optique démultiplexé amplifié, se réfère aux instructions reçues, et le miroir renvoie le paquet optique vers le multiplexeur.

Selon encore un autre mode de réalisation l'émetteur comprend
- un laser accordable ou sélectionnable apte à transformer le signal électrique reçu de la carte électronique en un signal optique constant,
- un modulateur apte à moduler le signal optique constant reçu du laser, à y insérer des données et à le transformer en paquet optique, et
- un amplificateur servant de porte optique pour le paquet optique reçu du modulateur.

Selon un premier aspect, le noeud de réseau métropolitain comprend en outre au moins un coupleur apte à insérer dans la liaison optique un paquet optique issu de l'émetteur.

Selon un deuxième aspect, le noeud de réseau métropolitain comprend en outre au moins un canal de contrôle reliant la liaison optique à la carte électronique apte à transmettre des instructions de et vers la matrice de commutation en réflexion.

Selon un troisième aspect, le noeud de réseau métropolitain comprend en outre au moins un coupleur apte à extraire de la liaison optique un paquet optique d'un canal de contrôle.

Selon un quatrième aspect, le noeud de réseau de télécommunication métropolitain comprend en outre au moins un coupleur apte à insérer dans la liaison optique un paquet optique d'un canal de contrôle.

Un réseau de télécommunication par commutation de paquet WDM sera prochainement déployé Un noeud de télécommunication à multiplexeur d'insertion/extraction de paquet optique POADM efficace et peu coûteux est l'un des principaux éléments constitutifs d'un tel réseau, et sa compatibilité avec le réseau existant est obligatoire. Le sélecteur / détecteur rapide PROS/D permet de réduire le coût d'un sélecteur de paquet optique FOPS, ainsi que le nombre de ces sélecteurs (un seul PROS/D dans une architecture de noeud par rapport à deux FOPS).

D'autres caractéristiques et avantages de la présente invention apparaîtront à la lecture de la description qui suit d'un mode de réalisation, donné bien entendu à titre illustratif et non limitatif, et dans le dessin annexé sur lequel
- la figure 1 illustre l'architecture d'un noeud de télécommunication à multiplexeur d'insertion/extraction de paquet optique POADM appartenant à un réseau de télécommunication métropolitain en anneau,
- la figure 2 illustre de manière plus détaillée la matrice de commutation en réflexion PROS/D du noeud de télécommunication à multiplexeur d'insertion/extraction de paquet optique POADM.

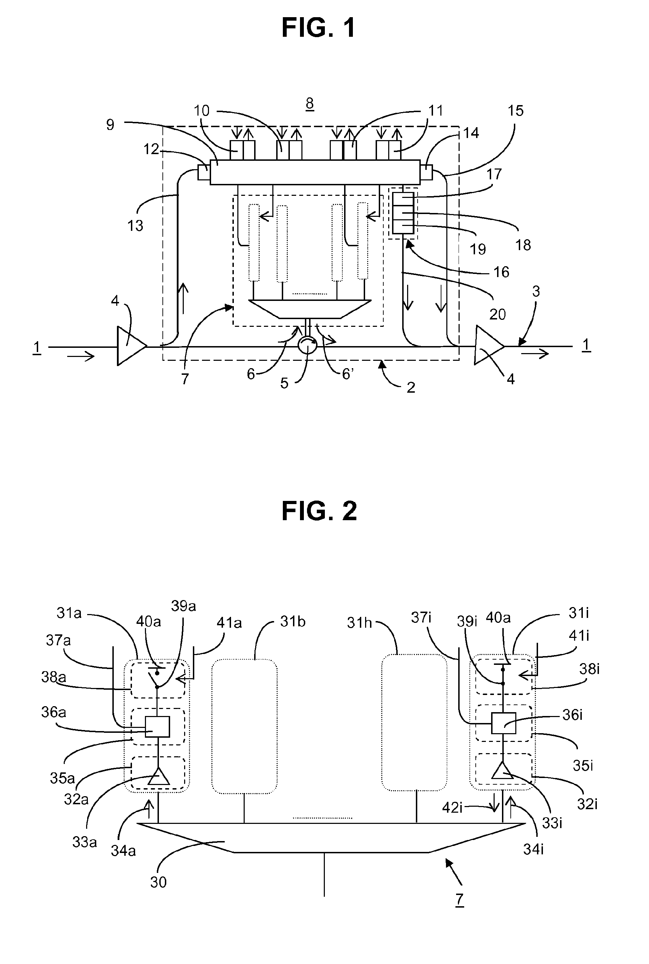

Dans le mode de réalisation illustré sur la figure 1, une portion d'un réseau métropolitain de télécommunication **1** en anneau comprend un noeud de télécommunication **2** basé sur un multiplexeur d'insertion/extraction de paquet optique POADM, et une liaison optique **3** telle qu'une fibre optique, transportant un signal optique multiplexé, reliant les noeuds de télécommunication POADM entre eux, des amplificateurs à fibre optique dopée à l'erbium EDFA **4** pouvant être en outre disposés entre les noeuds de télécommunication POADM. Un circulateur **5** oriente le flux de paquets optiques multiplexés circulant dans la liaison optique **3** dans le sens indiqué par la flèche **6** vers la matrice de commutation **7** du noeud de télécommunication POADM **2** qui sera décrite plus en détail ci-après.

Le noeud de télécommunication POADM **2** permet d'établir la liaison avec un réseau d'accès **8** à l'utilisateur grâce à une carte électronique **9** permettant de transformer le paquet optique en signal électrique. Les signaux électriques sont reçus du réseau d'accès **8** par des ports de réception RX **10** et transmis au réseau d'accès **8** par des ports d'émission TX **11.** En outre un port de réception RX **12** reçoit les instructions nécessaires au fonctionnement du noeud de télécommunication POADM **2** sous forme d'un paquet optique qui est transporté sur une longueur d'onde dédiée d'un canal de contrôle **13.** Le canal de contrôle **13** est relié au réseau en anneau **1** au niveau de l'entrée du noeud de télécommunication POADM **2** est détecté par un coupleur qui a pour rôle d'extraire le canal de contrôle **13** du flux de paquets optiques multiplexés circulant dans la liaison optique **3.** Un port d'émission TX **14** envoie des informations en retour sur le fonctionnement du noeud de télécommunication POADM **2** sous forme d'un paquet optique par un canal de contrôle **15.** Le canal de contrôle **15** est relié au réseau métropolitain **1** en anneau par un coupleur qui a pour fonction d'insérer le canal de contrôle **15** dans le flux de paquets optiques multiplexés circulant dans la liaison optique **3.** Un canal de contrôle **13, 15** sur une longueur d'onde dédiée est utilisé notamment pour connaître la destination de chaque paquet optique, et transmettre les informations nécessaires au noeud de télécommunication POADM **2** afin qu'il puisse réaliser les différentes opérations (extraction, addition, détection, transmission, etc...) prévues pour que le paquet optique arrive à destination.

Les signaux électriques en provenance du réseau d'accès **7,** via les ports de réception RX **10** et la carte électronique **9,** sont traités et transmis vers la couche optique du noeud de télécommunication **2** par un émetteur **16.** L'émetteur **16** comprend un laser rapide **17** accordable ou sélectionnable qui émet un signal optique constant non modulé. Le signal optique constant est envoyé à un modulateur **18.** Le signal optique est alors modulé et transformé en paquet optique par introduction de données. Un amplificateur optique **19** placé après le modulateur **18** permet d'effacer ou amplifier les différents paquets optiques. Le laser sélectionnable peut être un circuit intégré photonique PIC (pour « Photonique Integrated Circuit » en anglais) qui comporte plusieurs lasers fixes intégrés sur une même puce. Dans l'émetteur **16,** le laser rapide **17** accordable ou sélectionnable est utilisé pour générer différentes longueur d'onde, le modulateur **18** est utilisé pour imprimer une modulation sur le paquet optique et l'amplificateur optique SOA **19** est utilisé comme porte optique pour bloquer (ou amplifier) le paquet optique. Par exemple, quand le laser rapide **17** accordable ou sélectionnable s'accorde sur une nouvelle longueur d'onde, l'amplificateur optique SOA **19** est mis en position d'arrêt « OFF » pendant cette opération, bloquant ainsi tout paquet optique parasite (bruit interférométrique). Puis l'amplificateur optique SOA **19** est de nouveau mis sur la position de marche « ON » quand un nouveau paquet optique est envoyé sur cette nouvelle longueur d'onde par le canal optique **20** qui relie le laser rapide **17** accordable ou sélectionnable au réseau en anneau **1.** Le paquet optique issu de l'émetteur **16** est inséré dans le trafic du réseau de télécommunication en anneau **1** par exemple au moyen d'un coupleur. Le coupleur a pour fonction d'insérer le paquet optique issu de l'émetteur **16** par le canal **20** dans le flux de paquets optiques multiplexés circulant dans la liaison optique **3.**

On considérera maintenant la figure 2 qui illustre plus en détail la matrice de commutation en réflexion **7** appelé sélecteur / détecteur rapide de paquet optique PROS/D, du noeud de télécommunication POADM **2.** A la sortie du circulateur **5,** le flux de paquets optiques entre dans un multiplexeur d'insertion/extraction de paquet optique **30** qui sépare les paquets optiques en fonction de leur longueur d'onde, et affecte chaque paquet optique à un amplificateur optique RSOA **31 a, 31b,..., 31h, 31i** respectivement. L'amplificateur optique en réflexion RSOA **31a** par exemple comporte trois sections.

A l'entrée, la première section **32a** toujours polarisée positivement est utilisée comme un amplificateur optique **33a** qui a pour fonction d'amplifier le paquet optique démultiplexé entrant **34a.**

La deuxième section **35a** polarisée négativement est utilisée comme un récepteur **36a** ayant pour fonction, selon les instructions reçues, de détecter et sélectionner le paquet optique démultiplexé entrant **34a** amplifié. Le signal optique détecté est transformé en un signal électrique envoyé par la connexion **37a** vers le réseau d'accès **8** via la carte électronique **9.** Le récepteur **36a** peut aussi recevoir comme instruction de laisser passer le paquet optique entrant **34a** amplifié vers la troisième section sans le sélectionner. La longueur de la deuxième section **35a** est déterminée comme un compromis entre la bande passante de détection et la sensibilité, pour obtenir une bande passante de détection de 40 GHz et plus.

La troisième section **38a** de l'amplificateur optique à semiconducteur à réflexion RSOA **31a** est une porte logique **39a** suivie d'un miroir **40a.** La porte logique **39a** reçoit par la liaison **41a** les instructions sous forme de signal électrique apportées par le canal de contrôle **13.** La troisième section **38a** est soit polarisée positivement pour transmettre le paquet optique entrant, soit reliée à la terre, ou polarisé négativement pour augmenter l'absorption dans cette zone, afin d'effacer le paquet optique. C'est ce dernier cas qui est représenté ici.

De même l'amplificateur optique RSOA **31i** comporte aussi trois sections analogues à celles précédemment décrites. La première section **32i** toujours polarisée positivement est un amplificateur optique **33i** qui a pour fonction d'amplifier le paquet optique entrant **34i.**

La deuxième section **35i** est un récepteur **36i** ayant pour fonction de détecter le paquet optique entrant **34i** une fois amplifié dans la première section **32i.** Et, selon les instructions reçues, le récepteur **36i** envoie le signal optique détecté est transformé en un signal électrique par la connexion **37i** vers le réseau d'accès **8.**

La troisième section **38i** de l'amplificateur optique à semiconducteur réfléchissant RSOA **31i** est une porte logique **39i** suivie d'un miroir **40i.** La porte logique **39i** reçoit par la liaison **41i** les instructions sous forme de signal électrique apportées par le canal de contrôle **13.** La troisième section **38i** est ici polarisée positivement pour transmettre le paquet optique. Dans le cas de la transmission du paquet optique, celui-ci est réfléchi par le miroir **40i** et repart en chemin inverse sous la forme d'un paquet optique sortant **42i** jusqu'au multiplexeur **30.** La fonction d'amplificateur optique **33i** de la première section **32i** a alors pour rôle de stimuler le paquet optique sortant **42i.**

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, on pourra sans sortir du cadre de l'invention modifier le nombre d'amplificateur optique à semiconducteur à réflexion RSOA dans la matrice de commutation en réflexion sélecteur / détecteur rapide de paquet optique PROS/D d'un noeud d'un réseau métropolitain en relation avec au moins un réseau d'accès dans un réseau de télécommunication.

## Revendications

1. Noeud de réseau de télécommunication mettant en relation un réseau métropolitain, comprenant au moins une liaison optique reliant les noeuds, avec au moins un réseau d'accès, comprenant
- une carte électronique permettant l'agrégation du trafic venant de plusieurs réseaux d'accès,
- un émetteur apte à recevoir un signal électrique de la carte électronique et d'émettre un paquet optique vers le réseau métropolitain,
- un circulateur apte à extraire un flux de paquets optiques multiplexés de la liaison optique et à insérer un flux de paquets optiques multiplexés dans la liaison optique,
- une matrice de commutation en réflexion recevant un flux de paquets optiques multiplexés parmi lesquels elle sélectionne et détecte ceux destinés au réseau d'accès.

2. Noeud de réseau de télécommunication selon la revendication 1, dans lequel la matrice de commutation en réflexion comprend
- un multiplexeur d'insertion/extraction de paquet optique POADM qui reçoit des paquets optiques multiplexés et transmet des paquets optiques démultiplexés,
- au moins un amplificateur optique à semiconducteur à réflexion RSOA apte à recevoir un paquet optique démultiplexé, qui comporte trois sections.

3. Noeud de réseau de télécommunication selon l'une des revendications 1 et 2, dans lequel l'amplificateur optique à semiconducteur à réflexion RSOA comprend
- une première section qui est un amplificateur optique pour amplifier le paquet optique démultiplexé,
- une deuxième section qui est un détecteur qui reçoit le paquet optique démultiplexé amplifié, et détecte les paquets optiques démultiplexés amplifiés destinés à être directement transmis à la carte électronique selon les instructions reçues,
- une troisième section qui est une porte logique pour l'extraction ou la transmission par réflexion des paquets optiques démultiplexés amplifiés.

4. Noeud de réseau de télécommunication selon l'une des revendications 1 à 3, dans lequel le détecteur identifie le paquet optique démultiplexé amplifié, se réfère aux instructions reçues, et réalise l'envoi du paquet optique démultiplexé amplifié sous la forme d'un signal électrique vers la carte électronique.

5. Noeud de réseau de télécommunication selon l'une des revendications 1 à 3, dans lequel le détecteur identifie le paquet optique démultiplexé amplifié, se réfère aux instructions reçues, et réalise l'envoi du paquet optique démultiplexé amplifié vers la troisième section.

6. Noeud de réseau de télécommunication selon la revendication 5, dans lequel la porte logique de la troisième section identifie le paquet optique démultiplexé amplifié, se réfère aux instructions reçues, et extrait le paquet optique.

7. Noeud de réseau de télécommunication selon la revendication 5, dans lequel la porte logique de la troisième section identifie le paquet optique démultiplexé amplifié, se réfère aux instructions reçues, et le miroir renvoie le paquet optique vers le multiplexeur.

8. Noeud de réseau de télécommunication selon l'une des revendications précédentes, dans lequel l'émetteur comprend
- un laser accordable ou sélectionnable apte à transformer le signal électrique reçu de la carte électronique en un signal optique constant,
- un modulateur apte à moduler le signal optique constant reçu du laser, à y insérer des données et à le transformer en paquet optique,
- un amplificateur servant de porte optique pour le paquet optique reçu du modulateur.

9. Noeud de réseau de télécommunication selon l'une des revendications précédentes, comprenant en outre au moins un coupleur apte à insérer dans la liaison optique un paquet optique issu de l'émetteur.

10. N oe u d de réseau de télécommunication selon l'une des revendications précédente, comprenant en outre au moins un canal de contrôle reliant la liaison optique à la carte électronique apte à transmettre des instructions de et vers la matrice de commutation en réflexion.

11. Noeud de réseau de télécommunication selon la revendication 10, comprenant en outre au moins un coupleur apte à extraire de la liaison optique un paquet optique d'un canal de contrôle.

12. Noeud de réseau de télécommunication selon l'une des revendications 10 et 11, comprenant en outre au moins un coupleur apte à insérer dans la liaison optique un paquet optique d'un canal de contrôle.
